# EUROPEAN PATENT APPLICATION

(11) **EP 4 656 573 A1**
(43) Date of publication of application: **03.12.2025**
(21) Application number: 25178838.6
(22) Date of filing: 26.05.2025
(51) Int. Cl.: B66B 5/00, B66B 11/02

(54) **INSTALLATION OF AN ELECTRIC DEVICE TO AN ELEVATOR CAR**

(30) Priority: 27.05.2024 FI 20245671
(71) Applicant: Smart Connection Platform Oy, 00620 Helsinki (FI)
(72) Inventor: MÄKI, Jukka, 00620 Helsinki (FI); MANNINEN, Pentti, 00620 Helsinki (FI)
(74) Representative: Laine IP Oy

(57) **Abstract**

There is provided a method for installing an electric device to an elevator car. An installation tool includes a tube configured to carry electrification for the electric device; a plate attached at an end part of the tube, the plate having a hole; a detachable sleeve configured to carry the electrification through the hole of the plate, and a counter plate having a hole and configured to receive the electric device. The method comprises placing the installation tool outside of a wall of the elevator car such that the plate is configured to be placed next to outside wall of the elevator car, the tube is configured to extend along the outside wall of the elevator car; and the detachable sleeve is configured to pass through a hole on the wall of the elevator car; attaching the counter plate inside the elevator car to the wall of the elevator car and to the plate outside of the elevator car such that the detachable sleeve is configured to pass the hole of the plate, the hole of the wall and the hole of the counter plate. The method may comprise detaching the sleeve; and connecting the electric device inside the elevator car to the electrification and attaching the electric device to the counter plate.

## Description

### TECHNICAL FIELD

The present invention relates to a method and a tool for installing an electric device, for example a display, to an elevator car, and uses for the tool.

### BACKGROUND

Elevators may be planned for making a pleasant user experience. Different kind of images, lights, colours and surface material are used for decoration, furnishing and finishing. An elevator car may further be used for providing amusement and information. In addition to static adds, different kind of digital or electric devices may be utilized to provide sound, vision, images and/or virtual experiences for users. For older and existing elevators, adding digital or electric devices may be challenging.

### SUMMARY

Aim is to enable easy installation of an electric device to an elevator car.

The invention is defined by the features of the independent claims. Some embodiments are defined in the dependent claims.

According to a first aspect of the present invention, there is provided a method for installing an electric device to an elevator car, comprising an installation tool including: a tube configured to carry electrification for the electric device; a plate attached at end part of the tube, the plate having a hole; a detachable sleeve configured to carry the electrification through the hole of the plate; and a counter plate having a hole and configured to receive the electric device. The method comprises placing the installation tool outside of a wall of the elevator car such that the plate is configured to be placed next to outside wall of the elevator car, the tube is configured to extend along the outside wall of the elevator car; and the detachable sleeve is configured to pass through a hole on the wall of the elevator car; and attaching the counter plate inside the elevator car to the wall of the elevator car, and to the plate outside of the elevator car such that the detachable sleeve is configured to pass the hole of the plate, the hole on the wall, and the hole of the counter plate. The detachable sleeve may be detached. An electric device inside the elevator car may be connected to the electrification and attached to the counter plate.

The method may comprise arranging, e.g., drilling a hole to the wall of the elevator car. The detachable sleeve may be substantially perpendicular with the plate. The plate installation tool may comprise one or more magnets.

According to a second aspect of the present invention, there is provided an installation tool for installing an electric device to an elevator car. The installation tool comprises a tube configured to carry electrification for the electric device, wherein the tube is configured to be placed outside of the elevator car; a plate attached at an end part of the tube, wherein the plate comprising a hole, and the plate is configured to be placed outside of the elevator car; a detachable sleeve configured to carry the electrification for the electric device through the hole of the plate; and a counter plate comprising a hole, wherein the counter plate is configured to receive the electric device, and the counter plate is configured to be placed inside of the elevator car. The detachable sleeve is configured to be pass the hole of the plate a hole on a wall and the hole of the counter plate. The tube is configured to extend along outside wall of the elevator car. The counter plate inside of the elevator car is configured to be attached to the wall of the elevator car and to the plate outside of the elevator car. The electric device may be a display.

According to a third aspect of the present invention, there is provided use of the installing tool for installing an electric device to an inside wall of the elevator car. According to yet another aspect, there is provided a use of the installing tool for installing a display to inside wall of an elevator car.

### BRIEF DESCRIPTION OF THE DRAWINGS

In the following embodiments are discussed in more detail with reference to the attached drawings, of which:
Figure 1A illustrates, by way of an example, a front view of an installation tool.
Figure 1B illustrates, by way of an example, a back view of an installation tool.
Figure 2 illustrates, by way of an example, an installation tool outside of an elevator car.
Figure 3 illustrates, by way of an example, a back side of an installation tool.
Figures 4A-4C illustrates, by way of an example, an installation tool inside of an elevator car.
Figure 5 illustrates, by way of an example, a tube fixed outside of an elevator car.
Figure 6 illustrates, by way of an example, an electric box outside of an elevator car.
Figure 7 illustrates, by way of an example, a method for installation of an electric device to an elevator car.

Figures are presented as illustrative examples and embodiments may not be limited solely to the illustrated parts, but modifications may be made under the scope as defined in the claims. Figures that may not fully present the claimed invention, aim to provide better understanding on the context and relating technical field.

### DESCRIPTION OF EMBODIMENTS

There is provided an installation tool for installing an electric device to a wall of an elevator car. Installation tool comprise a plate at an end part of a tube for placing the plate to exterior (or outside) wall of an elevator car. A counter plate, placed correspondingly to opposing interior (or inside) wall of the elevator car is attached to the plate via the wall of the elevator car. The tube carries electrification for the electric device. The tube is arranged to carry electrification between an electrification box and the plate. A detachable sleeve is configured to pass a hole of the plate and to carry the electrification through a plane of the plate. The detachable sleeve is placed through a hole of the plate, a hole on the wall and a hole of the counter plate in order to carry the electrification from outside to inside the wall of the elevator car. The sleeve is detached after the plate and the counter plate are attached. Then the electric device may be coupled to electrification inside the elevator car and attached to the counter plate.

The electric device may be a display. Any other type and kind of electric devices may be installed to an elevator car using an installation tool. The installation tool enables easy and handy installation. The installation includes installing the electric device inside the elevator car and conveying electrification from outside of the elevator car to the electric device. Previously two assemblers have worked for such installations. Presented installation tool enables installation by a single assembler. In addition, refitting an electric device to an existing elevator car is faster and easier.

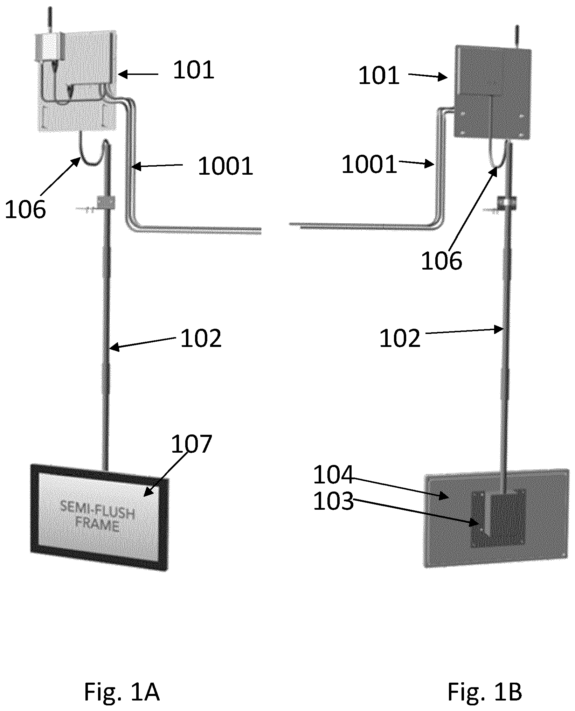

Figure 1A illustrates, by way of an example, a front view of an installation tool. An electric device 107 is configured to be attached inside of an elevator car. A fixing plate, or a counter plate 104, is configured to be attached inside of the elevator car. The electric device 107 is to be attached to the counter plate 104. A tube 102 is configured to carry electrification 106 to the electric device 107. The tube 102 is placed outside of the elevator car. The tube 102 may carry an electric cable or electric wires. The electrification 106 for the electric device is connected to an electric box 101. The electric box 101 is configured to be attached outside, to a structure of the elevator car. Electric connections 1001 of the electric box 101 are configured to be coupled to the elevator and/or to elevator connections.

Figure 1B illustrates, by way of an example, a back view of an installation tool. Same parts are referred with same reference numbers in Figs. 1A and 1B. In Fig. 1B Electric connections 1001 from the electric box 101 are connected to the elevator and/or elevator connections. Electrification 106 for an electric device is carried by a tube 102, which is configured to extend along external wall, parallel to the wall, to a plate 103. A counter plate 104 is configured to be attached to inside wall of the elevator car. The plate 103 and the counter plate 104 are configured to be at opposing sides of the wall, and/or opposing each other at corresponding places of the wall. In Figs. 1A and 1B, the plate 103 outside of an elevator car is configured to be attached to the counter plate 104 inside of the elevator car. The plate 103 is next to and/or against an outside wall of the elevator car, and the counter plate 104 is next to and/or against an inside wall of the elevator car. The plate 103 and the counter plate 104 are placed and/or attached to each other, at the same positions on the opposing sides of the elevator wall.

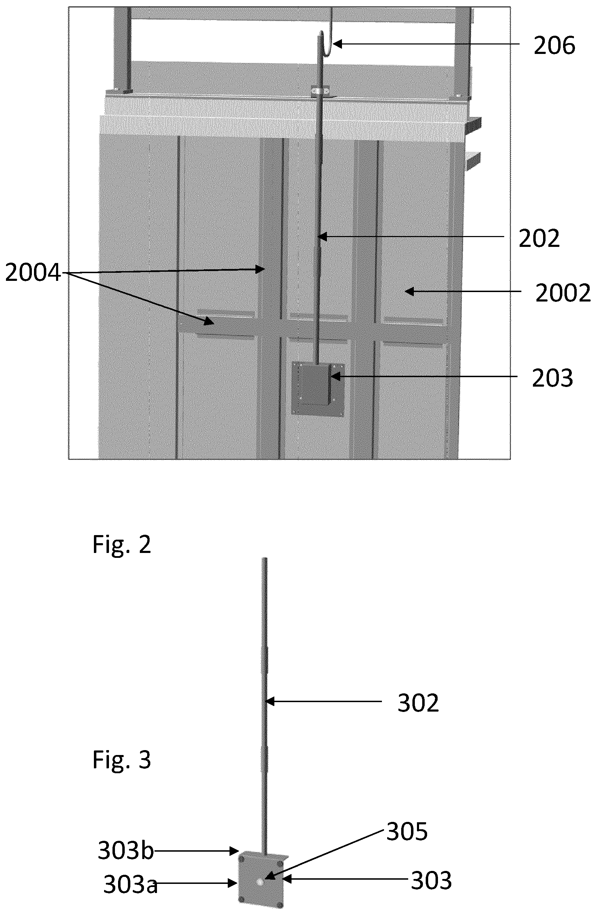

Figure 2 illustrates, by way of an example, an installation tool outside of an elevator car. A plate 203 is arranged to an outside wall 2002 of an elevator car, next or between supporting structures 2004. A tube 202 is configured to carry electrification 206 for an electric device and to an electric box, via which the electrification is to be connected to the elevator electricity and/or connections. Assembly shown in Fig. 2 is not visible to users, but it is arranged to outside, or to exterior of the elevator car. Outside here refers to an outside, exterior wall of an elevator car. Such assembly may be done for an existing and/or working elevator car. Working space is limited for installations, assemblies, refitting and/or other maintenance. Work may be done from above, e.g., from a roof of the elevator car, and/or from below, e.g., from outside/ external floor of the elevator car. The installation tool enables to find a place for attaching the electric device at outside wall of an elevator car, opposing the place selected at the inside wall of the elevator car. A through hole is arranged to the selected place of the wall in order to supply electrification from outside of the wall to inside of the wall. Electrification is carried by a tube and supplied from the electric box to an electric device. The installation tool enables to place and/or attach the plate and the tube outside of the elevator car. The detachable sleeve is configured to be carry electrification through the plate. The detachable sleeve is configured to be placed to the hole on the wall of the elevator car. This way, outside part of the installation tool may be set in place and/or held in place. Outside part of the installation tool comprises a tube, electrification for an electric device, optionally an electric box, a plate connected to the tube and a detachable sleeve configured to carry electrification and configured to protrude through the plate. One assembler may then complete the work inside the elevator car.

Figure 3 illustrates, by way of an example, a back side of an installation tool. A tube 302 may be a telescopic tube. Telescopic tube may be extended for use, and it may be stored and transported in a compact form. The tube 302 is arranged to extend from (or near from) an installation place to a selected place of a plate 303 at an outside wall of the elevator car. When working from above or below the elevator car, the plate 303 may be slide next to outside wall of the elevator. The selected place of the electric device inside of the elevator may have a certain, predetermined or selected height from inside floor of the elevator car. Placement of the electric device in width direction of the wall of the elevator car may be selected as desired. Placement, like width direction of the electric device (to be installed) may depend on structure of the elevator car. A hole is arranged, e.g., drilled, to the wall and the plate on the outside wall is arranged to face a plane surface of the wall. For example, the plate 303 on the outside wall of the elevator car is configured to be arranged between or next to possible support structures of the elevator car, and not on top of those. Example of a suitable placement is illustrated in Fig. 2, between support structures 2004.

The installation tool may be used for installing an electric device, e.g., a display to an elevator. The installation tool may be used for installations in different kind of elevators. The installation tool may be used for any elevator, which enables arranging a hole (a through hole) to an elevator wall. Material of elevator walls may be wood, steel, glass, or any other alloy or composition, or combination of such.

Fig. 3 shows a plate 303 comprising a planar part 303a and a side edge 303b. The side edge 303b is arranged at an angle to the planar part 303a. The planar part 303a is configured to contact an outside wall of the elevator car. The side edge 303b comprises a height extending form its face connecting with the planar part 303a to its outer face. The tube 302 may be attached to the side edge 303b of the plate 303, and/or through the side edge 303b and/or extend below the side edge 303b, next to the planar part 303a. The side edge 303b is presented as an example. A plate may comprise side edges on two or more of its sides, for example on each four sides of the plate. Further, there may be a back plate, optionally parallel with the planar part 303a, separated from the planar part 303a by one or more side edge 303b. One or more side edges enable providing space for electrification and/or for a detachable sleeve. One or more side edges may enable to attach the tube 302 with the plate 303. Plate may have different shapes and sizes. The plate 303, or the planar part 303a of it, is configured to be attached or fixed to the outside wall and to a counter plate placed on the corresponding place on the inside wall of the elevator car. When the installation tool is fixed to the wall, the wall is between the plate 303 the counter plate.

Fig. 3 shows plate 303 comprising fixing holes at corners of the square plate 303. Fixing holes are configured to receive fixing means configured to attach the plate 303 to the counter plate on the other (opposing) side of the wall of the elevator car. Fixing means may pass through the plate 303, the wall and the counter plate. Fixing means may be mechanical means, e.g., screw, bolt, coach screw, anchor leg, or alike. Also, adhesive and/or chemical masses may be utilized. A larger hole in the middle of the plate 303 is configured to receive and/or hold a detachable sleeve 305, which is configured to carry electrification through the plate. The elevator wall and the counter plate on inside of the wall have similar holes, and the detachable sleeve 305 is configured to passed the holes of the wall and the counter plate, in addition to the plate 303. The detachable sleeve 305 enables to provide electrification through the wall, as well as through the plate and the counter plate, for an electric device, which is to be attached to the inside wall of the elevator car. The detachable sleeve 305 may have a hollow conduit structure, e.g., a pipe, a line or a duct. The detachable sleeve 305 is configured to carry electrification, e.g., electric cable and/or wires, from outside of the wall to the inside. The detachable sleeve 305 may be substantially perpendicular with the planar part of the plate. The detachable sleeve 305 may enable to find a selected place for an installation tool exterior (outside, back side) of the wall, since it is configured to enter or slip to the hole in the wall when moved at least partly over the hole. It is enough for the assembler to know approximate place for the electric device. Sliding a plate with a detachable sleeve, using a tube, enables finding the correct place for the detachable sleeve and for the plate correspondingly. Further, this enables to place the plate on the outside wall. The plate and the detachable sleeve protruding to inside of the wall are configured to receive the counter plate, which corresponds to a fixing plate for an electric device inside the wall.

An elevator wall comprises a corresponding hole for electrification of an electric device. A hole may be arranged, or drilled, to a suitable or desired place of the elevator wall. A hole may be made from inside of the elevator car. The fixing plate or the counter plate (104, in Fig. 1B) comprises a similar hole for electrification. A detachable sleeve (305) is configured to pass the holes and carry the electrification, or electric contacts, for the electric device through the hole of the plate, the hole of the wall and the hole of the counter plate. External dimension of the detachable sleeve, e.g., external diameter of the detachable sleeve, is configured to be smaller compared to dimensions of the hole on the wall. The difference of the dimensions may be small, in order of millimetres. This enables to input the detachable sleeve to the hole on the wall. This is implemented easily, without any extra effort, and/or without a straight vision to the hole in the wall.

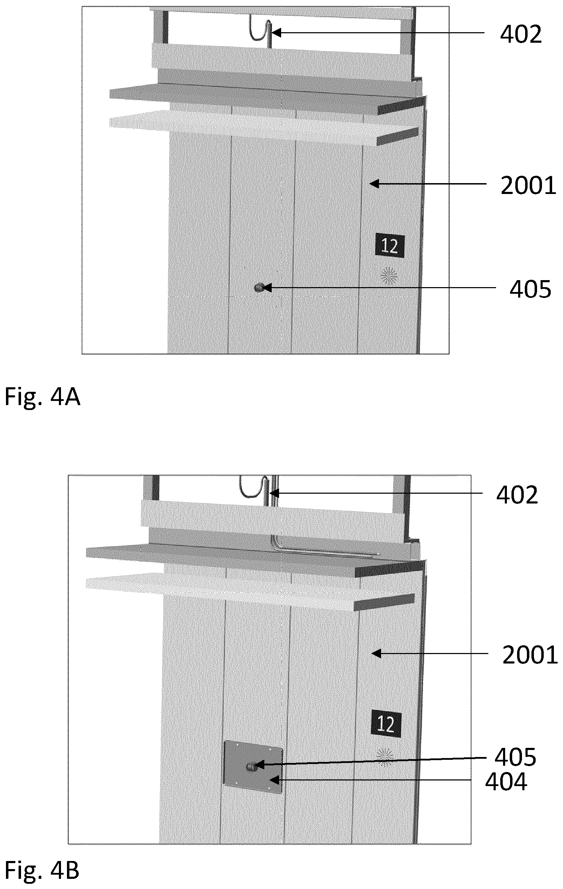

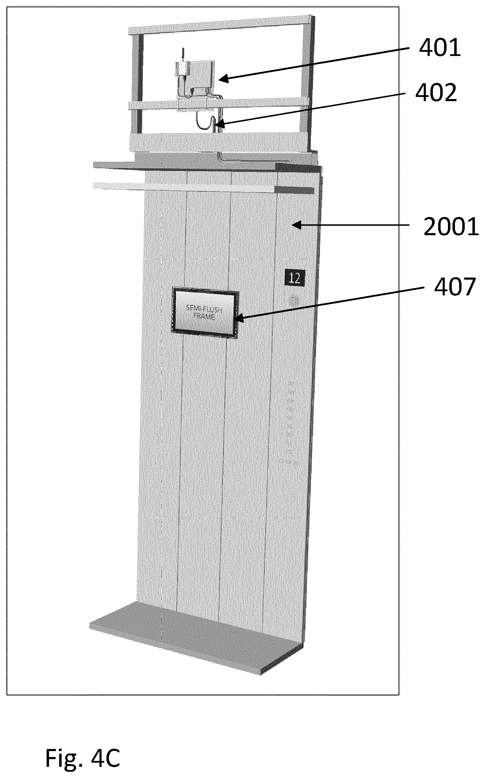

Figures 4A-4C illustrates, by way of an example, an installation tool inside of an elevator car. After the installation tool has been installed to the outside wall of the elevator car, e.g., as illustrated in Figs 3, the inside wall 2001 of the elevator car comprises a detachable sleeve 405 protruding from a hole of the wall in Fig. 4A. The tube 402 is configured to extend along outside of the corresponding wall, and/or parallel with the outside wall. The detachable sleeve 405 is placed in the hole of the wall, and introduces electrification for an electric device inside the elevator car. The detachable sleeve 405 may be detached and/or removed. Fig. 4B shows a fixing plate, or a counter plate 404, attached to inside wall 2001 of the elevator car. The detachable 405 may be removed/detached from the inside of the elevator car, and/or via the hole of the wall of the elevator. After the detachable sleeve 405 is detached, electrification is introduced inside the elevator car via the hole on the wall. The detachable sleeve 405 is detached and/or removed after the counter plate 404 is attached. The counter plate 404 is attached to the wall and to the plate on the outside wall. Fig. 4C shows outside wall tube 402 and electric box 401, which is fixed to (exterior) structure of an elevator. An electric device 407 has been attached to the counter plate 404 in the inside wall 2001 of the elevator car in Fig. 4C. The electric device 407 has been connected to electrification. The electric device 407 is electrified from the electric box, via electrification carried by the tube 402 outside of the wall, and via the holes of the plate, the wall and the counter plate.

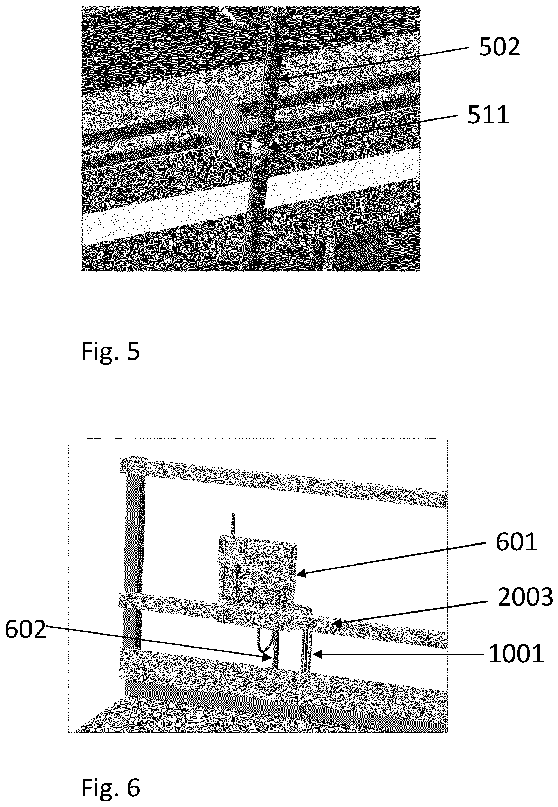

Figure 5 illustrates, by way of an example, a tube fixed outside of an elevator car. The tube 502 may be fixed to (exterior) structure of an elevator car, for example using bracket(s) and/or alike fixing means.

Figure 6 illustrates, by way of an example, an electric box fixed outside of an elevator car. The electric box 601 may be fixed to structure of an elevator car, like on a balustrade 2003 of the elevator. The electrification box 601 is configured to provide electrification for an electric device via a tube 601. The electrification box 601 is configured to be connected 1001 to the elevator, or electrification of such.

The installation tool may be used for any kind of elevators. Only a through hole, if not existing, is to be arranged, or drilled, to a desired place of a wall of an elevator. The desired place may be selected according to desired placement of the electric device. If structure of the elevator is known, placement may be selected accordingly. In some cases, structure of the elevator /elevator car may not be known in advance. Also in such case, structure shall be taken into account for installing an electric device.

The plate, which may be moved along external wall of the elevator car using a tube, may comprise magnets configured to hold the plate on outside wall of the elevator car. For use of such, either the elevator wall is magnetic or (counter-) magnets may be arranged on the wall, e.g., on interior wall of the elevator. If elevator type or a car type of it is not known, magnets may be used for finding a suitable placement for the plate on outside wall; and correspondingly for the electric device on inside wall. After a suitable placement has been found, e.g., magnetic placement of the outside plate has been fixed, corresponding placement of the magnetically held plate may be located from inside wall/interior of the elevator car. After the inside place has been defined, the hole may be arranged on the desired place on inside wall. The detachable sleeve is arranged to protrude the hole on the wall. One alternative may be to use a firm, durable and/or solid detachable sleeve, which maintains its shape and enables to hold the plate in place on the outside wall, e.g., with aid of the tube.

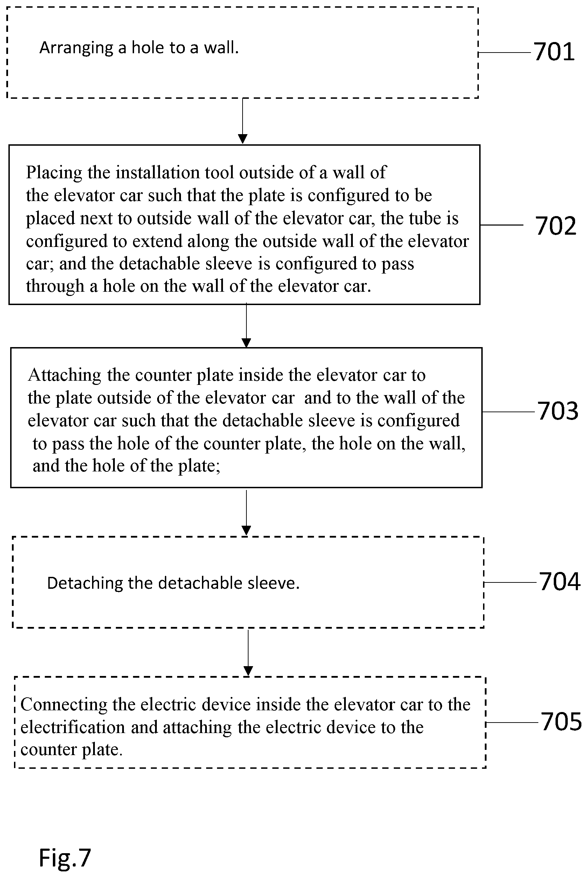

Figure 7 illustrates, by way of an example, a method for installing an electric device to an elevator car. An installation tool includes a tube configured to carry electrification for the electric device; a plate attached at an end part of the tube, the plate having a hole; a detachable sleeve configured to carry the electrification through the hole of the plate, and a counter plate having a hole and configured to receive the electric device. The method may comprise, optionally at phase 701, arranging a hole to a wall of the elevator. The hole is a through hole for receiving electrification form outside to inside of the elevator car. If no hole is already provided, a hole may be drilled, for example. The method comprises, at phase 702, placing the installation tool outside of a wall of the elevator car such that the plate is configured to be placed next to outside wall of the elevator car, the tube is configured to extend along the outside wall of the elevator car; and the detachable sleeve is configured to pass through a hole on the wall of the elevator car. The method further comprises, at phase 703, attaching the counter plate inside the elevator car to the wall of the elevator car and to the plate outside of the elevator car such that the detachable sleeve is configured to pass the hole of the plate, the hole on the wall, and the hole of the counter plate. Method may further comprise, at phase 704, detaching the detachable sleeve. At this phase, the electrification is brought form exterior of the elevator car to interior of the elevator car. Electrification is now provided via tube exterior of the elevator car, without the (detached) sleeve. The method may further comprise, at phase 705, connecting the electric device inside the elevator car to the electrification and attaching the electric device to the counter plate.

The method may comprise placing the installation tool from above or below of the elevator car. The tube may comprise a telescope tube. The method may comprise attaching the tube to the outside of the elevator car, or to a structure of the elevator car. The method may comprise fixing an electric box, which comprises electrification for the electric device, to the outside of the elevator car, optionally on a balustrade of the elevator.

The method may comprise drilling additional holes configured to receive fixing means to the wall of the elevator car; wherein the plate and the counter plate comprise corresponding holes. The method may comprise sliding the installation tool along a wall of the elevator car from the roof of the elevator car. The method may comprise removing sleeve from the inside of the elevator car, and/or via the hole of the wall of the elevator car.

The method may comprise holding the plate on outside wall of the elevator car by magnets. The method may comprise setting the plate of the installation tool outside the elevator car in order to locate a desired placement area of the electric device. The method may comprise locating the plate magnetically held to the outside wall of the elevator car from the inside wall of the elevator car; and fixing the counter plate to the inside wall of the elevator car to the plate magnetically held to the outside wall of the elevator car.

In the previous description and figures an installation tool may be used for installing an electric device to an existing and/or working elevators. There is provided use of the installing tool for installing an electric device to an inside wall of the elevator car. Further, there is provided a use of the installing tool for installing a display to inside wall of an elevator car.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

The described features, structures, or characteristics may be combined in any suitable manner in one or more embodiments. In the previous description, numerous specific details are provided, such as examples of structures, lengths, widths, shapes, etc., to provide a thorough understanding of embodiments of the invention. One skilled in the relevant art will recognize, however, that the invention can be practiced without one or more of the specific details, or with other methods, components, materials, etc. in the context of elevators. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

The used verb "attach" corresponds to fixing, joining and/or fastening. Coupling and connecting may relate to electric connections instead, or in addition to attaching.

## Claims

1. **A method** for installing an electric device to an elevator car, comprising
- an installation tool including:
∘ a tube configured to carry electrification for the electric device,
∘ a plate attached at an end part of the tube, the plate having a hole, and
∘ a detachable sleeve configured to carry the electrification through the hole of the plate, and
∘ a counter plate having a hole and configured to receive the electric device;
- placing the installation tool outside of a wall of the elevator car such that the plate is configured to be placed next to outside wall of the elevator car, the tube is configured to extend along the outside wall of the elevator car; and the detachable sleeve is configured to pass through a hole on the wall of the elevator car,
- attaching the counter plate inside the elevator car to the wall of the elevator car and to the plate outside of the elevator car such that the detachable sleeve is configured to pass the hole of the plate, the hole of the wall and the hole of the counter plate;
- wherein the method optionally further comprises
- detaching the sleeve; and
- connecting the electric device inside the elevator car to the electrification and attaching the electric device to the counter plate.

2. A method for installing an electric device to an elevator car according to the claim 1, comprising arranging a hole to a wall of the elevator car; and/or extending the tube, wherein the tube comprises a telescopic tube.

3. A method for installing an electric device to an elevator car according to any of the previous claims, comprising attaching the tube to the outside of the elevator car, or to a structure of the elevator car.

4. A method for installing an electric device to an elevator car according to any of the previous claims, comprising an electric box configured to provide electrification for the electric device via the tube and detachable sleeve, and/or fixing the electric box to outside structure of the elevator car, optionally on a balustrade of the elevator.

5. A method for installing an electric device to an elevator car according to any of the previous claims, wherein placing the installation tool comprises sliding, with aid of the tube, the installation tool along a wall of the elevator car.

6. A method for installing an electric device to an elevator car according to any of the previous claims, wherein the detachable sleeve is substantially perpendicular with the plate.

7. A method for installing an electric device to an elevator car according to any of the previous claims, wherein the plate of the installation tool comprises one or more magnets configured to hold the plate next to outside wall of the elevator car.

8. A method for installing an electric device to an elevator car according to the previous claim 7, comprising locating the plate magnetically held to the outside wall of the elevator car from the inside wall of the elevator car; and attaching the counter plate to the inside wall of the elevator car to the plate magnetically held to the outside wall of the elevator car.

9. An installation tool for installing an electric device to an elevator car comprising
- a tube configured to carry electrification for the electric device and the tube configured to be placed outside of the elevator car,
- a plate attached to an end part of the tube, the plate having a hole, and the plate configured to be placed outside of the elevator car,
- a detachable sleeve configured to carry the electrification for the electric device through the hole of the plate, and
- a counter plate comprising a hole, the counter plate configured to receive the electric device, and the counter plate configured to be placed inside of the elevator car,
- wherein the detachable sleeve is configured to be pass the hole of the plate, a hole on a wall of the elevator car, and the hole of the counter plate,
- wherein the tube is configured to extend along outside wall of the elevator car; and
- wherein the counter plate inside of the elevator car is configured to be attached to the wall of the elevator car and to the plate outside of the elevator car.

10. An apparatus for installing an electric device to an elevator car according to the claim 9, comprising an electric box configured to provide electrification for the electric device via the tube and the detachable sleeve, and/or configured to be connected outside of the elevator car.

11. An apparatus for installing an electric device to an elevator car according to any of the claims 9-10, wherein the tube comprises a telescope tube.

12. An apparatus for installing an electric device to an elevator car according to any of the claims 9-11, wherein the plate comprises a planar part and at least one side edge at an angle to the planar part, wherein the planar part is configured to be fixed to the counter part.

13. An apparatus for installing an electric device to an elevator car according to the claim 12, wherein the sleeve is substantially perpendicular with the planar part of the plate.

14. An apparatus for installing an electric device to an elevator car according to any of the claims 9-13, wherein the plate comprises one or more magnets configured to hold the plate next to the outside wall of the elevator car.

15. An apparatus for installing an electric device to an elevator car according to any of the claims 9-15, wherein the electric device is a display.
